# EUROPEAN PATENT APPLICATION

(11) **EP 4 769 789 A1**
(43) Date of publication of application: **01.07.2026**
(21) Application number: 24223475.5
(22) Date of filing: 27.12.2024
(51) Int. Cl.: H01M 50/502, H01M 50/503, H01M 50/507, H01M 50/516

(54) **BUSBAR ARRANGEMENT AND BATTERY MODULE**

(71) Applicant: Ioncor Oy, 23500 Uusikaupunki (FI)
(72) Inventor: HEISKANEN, Juuso, 23500 Uusikaupunki (FI); KOPRA, Lasse, 23500 Uusikaupunki (FI)
(74) Representative: Papula Oy

(57) **Abstract**

A busbar arrangement (100) for creating an electrical connection between at least two contacts (5), and a battery module. The busbar arrangement comprises a busbar (1) comprising a flexible area (2) arranged between at least two attachment sections (4). The busbar arrangement (100) further comprises a barrier element (3) arranged to enclose the flexible area (2). The barrier element (3) is configured to provide a cavity (6) between the surroundings (17) of the barrier element (2) and the flexible area (2).

## Description

### BACKGROUND

The invention relates to a busbar arrangement.

The invention further relates to a battery module.

Busbars are solid metal bars used to carry current in batteries. Typically made from copper or aluminum, busbars are rigid and typically flat. The busbars are able to carry more current than cables with the same cross-sectional area. This makes busbars ideal for some high-voltage connections e.g. in electric vehicles (EVs) and a key component of the electrical architectures of tomorrow's vehicles.

There are several circumstances where introducing a level of flexibility into the busbar might be necessary. The busbar may be too rigid and thus it can be difficult to connect the ends due to manufacturing tolerances. Additionally, a rigid busbar is unforgiving when it comes to thermal expansion. Busbars are many times joined by welding. High stresses can happen to the weldings due to thermal expansion and, dynamic and vibration loads and due cell swelling. Flexibility can be added to a busbar by a flexible area, such as bendings, for example Z-bending, U-bending or any combination of these bendings.

On next generation battery packs there will be needs to raise rigidity of battery or battery module structure, or to improve cooling performance thereof, by dispensing different kind of filling materials, such as adhesives, expanding foams, thermal pastes, thermal gap fillers or other encapsulants in the battery or battery module. A problem relating to these filling materials is that when it is in flowable form, it goes around and between the bendings of the busbar. When the filling material solidifies, it may effectively prevent the flexible area of the busbar from functioning as designed.

### BRIEF DESCRIPTION

Viewed from a first aspect, there can be provided a busbar arrangement for creating an electrical connection between at least two contacts, comprising a busbar, comprising at least two attachment sections for attachment to respective contacts of said at least two contacts, and a flexible area arranged between said at least two attachment sections, the busbar arrangement further comprising a barrier element arranged to enclose the flexible area, the barrier element configured to provide a cavity between the surroundings of the barrier element and the flexible area.

Thereby a busbar arrangement where the flexible area of the busbar maintains its flexibility even though its surroundings is filled with a filling material may be achieved.

Viewed from a further aspect, there can be provided a battery module comprising the busbar arrangement of the first aspect, and filling material arranged to encapsulate the busbar arrangement.

Thereby a battery module where the flexible area of the busbar maintains its flexibility even though its surroundings is filled with a filling material may be achieved.

The busbar arrangement and the battery module are characterised by what is stated in the independent claims. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

Various embodiments of the first aspect may comprise at least one feature from the following paragraphs:
In one embodiment, the flexible area comprises at least one bending, and the barrier element is arranged to provide the cavity at least at inside of said bending, preferably at inside and at outside of said bending.

An advantage is that flexibility of the flexible area is maintained at least when the busbar tends to shorten or shorten and extend.

In one embodiment, the flexible area comprises a length compensation section having an oblong opening alternating with elongated elements, and the barrier element is arranged to cover the oblong opening such that the cavity is provided.

An advantage is that flexibility of the flexible area is maintained in various situations.

In one embodiment, the barrier element comprises a barrier sheet that is configured to provide and maintain the cavity between the flexible area and said barrier sheet.

An advantage is that a barrier element that is quick to assemble and has a non-expensive structure may be achieved.

In one embodiment, the barrier sheet comprises a tape.

An advantage is that a barrier element that is quick to assemble and has a non-expensive structure may be achieved.

In one embodiment, the tape comprises adhesive sections on its edges.

An advantage is that the barrier element may easily be attached to surfaces around the flexible area without attaching it to said flexible area.

In one embodiment, the barrier sheet comprises a tube and the flexible area is arranged inside said tube.

An advantage is that a barrier element that provides barrier around the flexible area in a simple and quick way may be achieved.

In one embodiment, the barrier element comprises a two-phase material system where a gas is in a non-gaseous flexible material.

An advantage is that a barrier element that provides elastic, i.e., reversible, flexibility may be achieved.

In one embodiment, the barrier element comprises a foam element that includes numerous gas cells.

An advantage is that flexibility and elasticity of the barrier element may be maintained even if some of the gas cells are filled with filling material. Further, the foam element may have a self-supporting structure that stands forces caused by the filling material. In one embodiment, the foam element is made of polyurethane, such as material having a trade name Poron. In one embodiment, the foam element is made of ethylene-vinyl acetate (EVA). In one embodiment, the foam element is made of silicone foam. The silicone foam stands up well to temperatures the busbar may warm up.

In one embodiment, the flexible areas of at least two busbars are enclosed by a shared barrier element.

An advantage is that the structure and manufacturing of a battery or battery module comprising plurality of busbars may be simplified.

Based on the above mentioned, it should be noted that different embodiments mentioned in the above paragraphs may combined in any possible suitable manner for implementing the present invention.

### BRIEF DESCRIPTION OF FIGURES

Some embodiments illustrating the present disclosure are described in more detail in the attached drawings, in which
Figure 1 is a schematic side view of a busbar arrangement and battery module in partial cross-section,
Figure 2 is a schematic side view of a busbar arrangement and battery module in partial cross-section,
Figure 3 is a schematic side view of a busbar arrangement and battery module in partial cross-section,
Figure 4 is a schematic view of a busbar arrangement,
Figure 5 is a schematic top view of a busbar arrangement and battery module,
Figure 6 is a schematic side view of a busbar arrangement, and
Figure 7 is a schematic side view of a battery in partial cross-section.

In the figures, some embodiments are shown simplified for the sake of clarity. Similar parts are marked with the same reference numbers in the figures.

### DETAILED DESCRIPTION

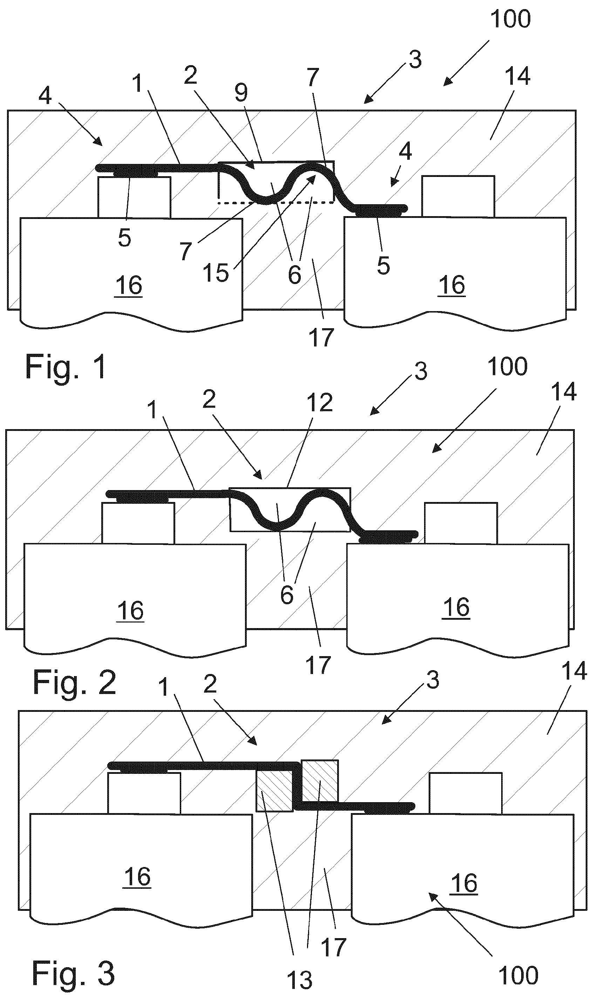

**Figure 1** is a schematic side view of a busbar arrangement and battery module in partial cross-section. The busbar arrangement 100 comprises one or more busbar(s) 1 made of electrically conductive material(s) arranged for creating an electrical connection between at least two contacts 5 in a battery. In one embodiment, the busbar 1 has a monolayer structure. In another embodiment, the busbar 1 has a multilayer structure.

The busbar 1 comprises at least two attachment sections 4 (in Figure 1 two) for attachment to respective contacts 5. In one embodiment, such as shown in Figure 1, the busbar 1 is joined by, e.g., welding between cell positive and negative terminal areas.

The busbar 1 further comprises a flexible area 2 that is arranged between two attachment sections 4. The flexible area 2 provides some flexibility to the busbar for preventing or reducing stresses caused by the busbar to the contacts 5.

The busbar arrangement 100 further comprises a barrier element 3 that is arranged to enclose the flexible area 2. The term "enclose the flexible area" means in this description that the filling material is prevented from contacting with the flexible area such that a cavity 6 or cavities devoid of the filling material is/are maintained at the flexible area 2 in such an extent that an appropriate function of the flexible area is guaranteed. In one embodiment, the barrier element 3 alone provides the cavity or cavities. In another embodiment, the barrier element 3 provides the cavity or cavities in cooperation with another element or surface of the respective battery module.

The barrier element 3 provides the cavity 6 between the surroundings 17 of the barrier element and the flexible area 2. The surroundings may be any space or room in the battery module that is or will be filled at least partially with the filling material.

In one embodiment, the barrier element 3 comprises a barrier sheet 9 that is configured to provide and maintain the cavity 6 between the flexible area 2 and said barrier sheet 9. The barrier sheet 9 may be folded and shaped in suitable way to provide the cavity 6.

The material and structure of the sheet is selected so that it essentially bears stresses caused by a filling material 14 so that the cavity 6 is maintained between the flexible area 2 and said barrier sheet 9. These stresses are typically at their highest level when the filling material 14 is cast or poured in the battery module at the manufacturing thereof.

In one embodiment, the sheet is made of plastic material or plastic composite, preferably of electrically non-conductive material. Some examples of the sheet materials are polyolefins, such as PE and PP, PET, elastomers, such as rubber, synthetic rubber, etc.

In one embodiment, the sheet is made of metal.

In one embodiment, the barrier element has a solid structure, i.e., structure without through holes or perforations. In one embodiment, the barrier element has a mesh structure, where the mesh size is selected so that the filling material 14 cannot penetrate the barrier element in such extent that the cavity 6 will be filled by the filling material.

The filling material may be an adhesive, an expanding foam, a paste, e.g., a thermal gap filler or other encapsulant, a fire shielding material, etc.

The filling material may be hard, semi-hard or flexible material.

In one embodiment, the filling material is a potting resin. In one embodiment, the filling material is polyurethane. In one embodiment, the filling material is epoxy. In one embodiment, the filling material is silicone.

In one embodiment, the flexible area 2 comprises at least one bending 7 and the barrier element 3 is arranged so that it provides the cavity 6 at inside 15 of said bending. In one embodiment, the barrier element 3 is arranged to provide the cavity 6 at outside of the bending, i.e., to the side opposite to the inside 15. In one embodiment, the barrier element 3 is arranged to provide the cavity 6 on both sides of the bending. The shown embodiment comprises two bendings 7, and the barrier element 3 provides the cavity 6 on both sides of the bendings.

**Figure 2** is a schematic side view of a busbar arrangement and battery module in partial cross-section. In one embodiment, the barrier sheet is or comprises a tube 12. The flexible area 2 is inside said tube and the cavity 6 lies between the tube 12 and the flexible area 2.

In one embodiment, the tube 12 is a heat-shrink tube, and at least one of the ends of the tube 12 is closed by shrinking around the busbar 1.

In one embodiment, the tube 12 is closed by glueing or by a separate closure element (not shown).

**Figure 3** is a schematic side view of a busbar arrangement and battery module in partial cross-section. In one embodiment, the barrier element 3 comprises a two-phase material system where a gas is dispersed in a non-gaseous flexible material. In one embodiment, the two-phase material system comprises a foam element 13 that includes numerous gas cells. In other words, the cavity 6 is formed by numerous gas cells.

In one embodiment, at least the majority of said gas cells are closed cells.

In one embodiment, at least the majority of said gas cells are open cells. The size of the gas cells is selected so that the filling material 14 cannot fill the barrier element to such extent that the cavity 6 would be lost.

In one embodiment, the two-phase material system comprises only a few closed gas spaces, or in some embodiments just one closed gas space, that constitutes the cavity 6. The closed gas space is arranged in a non-gaseous flexible material matrix, made of, e.g., elastomeric material.

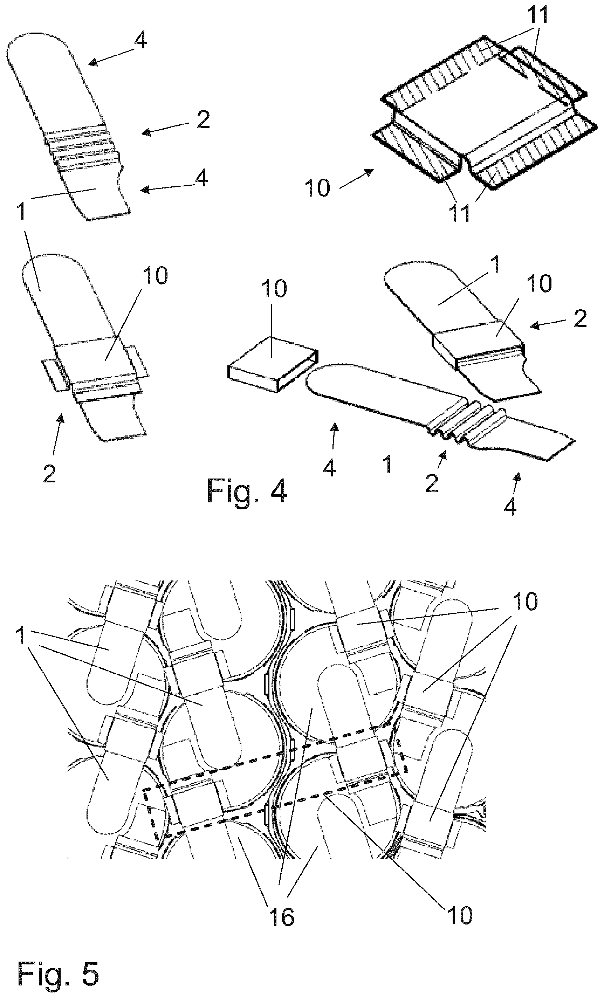

**Figure 4** is a schematic view of busbar arrangements and **Figure 5** is a schematic top view of some of the busbar arrangements shown in Figure 4 arranged in a battery module. In one embodiment, the busbar 1 consists of two attachment sections 4 and at least one flexible area 2 arranged between said two attachment sections 4. In the embodiments shown in Figure 4, the busbar 1 consists of two attachment sections 4 and one flexible area 2. The attachment sections 4 are typically arranged at the ends of the busbar.

The overall shape of the busbar 1 may vary. It may be straight (such as in shown embodiments) or, alternatively, comprise at least one curved section. The width of the busbar is preferably constant, but, alternatively, it may also have some variations. For instance, the busbars shown in Figure 4 has an end that is narrower than most of the busbar. This design allows a denser configuration of the busbars in the battery module, as shown in Figure 5.

In one embodiment, the barrier sheet comprises a tape 10. The tape 10 may be manufactured from suitable polymer materials, etc.

In one embodiment, the tape is arranged only one side of the flexible area 2 and adhered to a surface in the surroundings of the flexible area. One example of this embodiment is shown in Figure 5 where the tapes 10 are adhered to battery cells 16 and surfaces between the battery cells. Said surfaces may be, e.g., of supporting structures arranged for keeping the battery cells in place. In one embodiment, the supporting structure is an injection molded collar piece that is arranged at the level of one end of the battery cells. In another embodiment, the supporting structure is a filling foam that fills the gaps between the battery cells.

In one embodiment, the tape is winded around the flexible area 2, such as in the embodiment shown bottom right in Figure 4.

In Figure 5 the battery cells 16 have a cylindrical form factor. It is to be noted that the battery cells may also have another form factor, such as a prismatic form factor.

In one embodiment, the tape is arranged to extend around the flexible area 2, thus enclosing it from all directions.

In one embodiment, the tape 10 comprises adhesive sections 11 on its edges. Other parts of the tape are without adhesive. In one embodiment, the adhesive section is provided on all areas of one side of the tape 10. Then the tape may adhere also to certain sections of the flexible area.

In one embodiment, one barrier element 3 is arranged to enclose just one flexible area 2. In other embodiments, one barrier element 3 is arranged to enclose two or even more flexible areas. In other words, the flexible areas are enclosed by a shared barrier element. These flexible areas may be in one busbar 1 or in plurality of busbars. In Figure 5 it is shown by dashed lines an embodiment where one barrier element 3 encloses two flexible areas that are in two busbars. In one embodiment, the shared barrier element is arranged to enclose all the flexible areas 2 in the corresponding battery module.

In one embodiment, such as shown in Figure 4, the tape 10 has adhesive sections 11 on all the edges thereof.

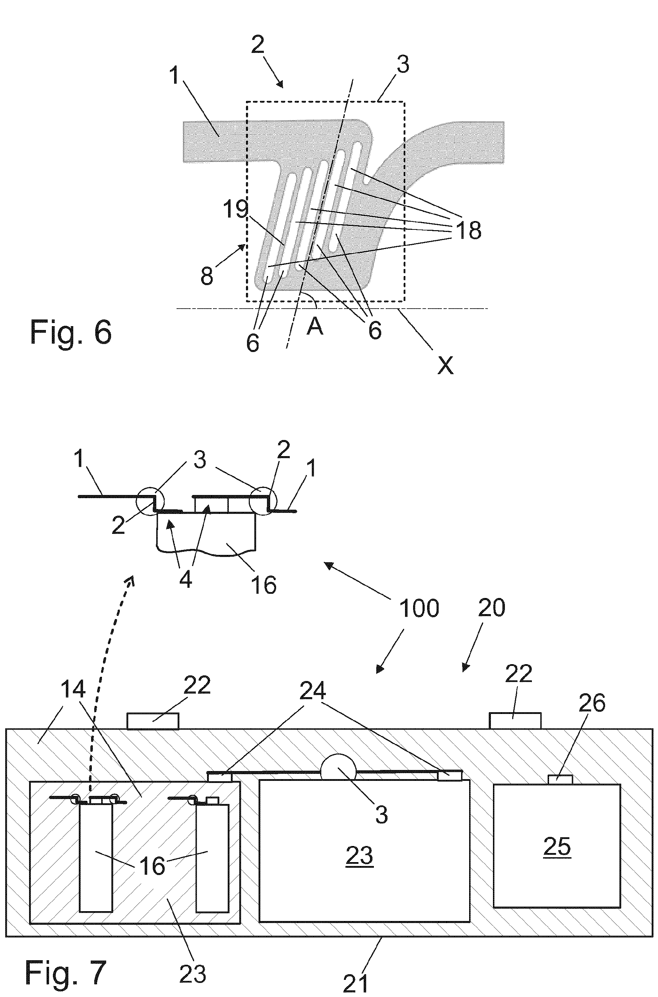

**Figure 6** is a schematic side view of a busbar arrangement. In one embodiment, the flexible area 2 comprises a length compensation section 8 that comprises oblong openings 18 alternating with elongated elements 19. The oblong openings 18 may be arranged perpendicular to the length direction X of the busbar 1, or to an oblique angle A with said X-direction as shown in Figure 6. The barrier element 3 is arranged to cover at least one, but preferably all, the oblong opening (s) 18 such that the cavity 6 is provided therein.

**Figure 7** is a schematic side view of a battery in partial cross-section. Additionally, a detail of the battery is shown enlarged. In one embodiment, the battery 20 is a drive battery of a fully or partly electricity-powered vehicle, such as a hybrid-powered car or an electric car. In another embodiment, the battery 20 is a battery of a stationary electricity source. The battery 20 may contain a casing or a housing 21 and battery terminals 22 through which the battery 20 is connected to a load or a charger.

In one embodiment, the battery cells 16 are arranged in battery modules 23. The battery 20 may comprise one battery module 23, but typically several battery modules 23. In one embodiment, the busbar arrangement 100 described in this disclosure is arranged for interconnecting at least two battery cells 16. In one embodiment, all the battery modules 23 of the battery comprises the busbar arrangement 100 described in this disclosure.

In one embodiment, the interconnected battery cells 16 in the battery module 23 are connected in an electrically conductive way to a module terminal 24 by using the busbar arrangement 100 described in this disclosure.

In one embodiment, the module terminals 14 are interconnected in an electrically conductive way by using the busbar arrangement 100 described in this disclosure.

In one embodiment, the interconnected module terminals 24 or the interconnected cell terminals 16 are connected in an electrically conductive way to the battery terminals 18 by using the busbar arrangement 100 described in this disclosure.

Typically, the battery 20 further comprises the other necessary elements to operate the battery cells and the battery modules. In one embodiment, said other necessary elements comprises a battery management controller (BMC) 25. The BMC 25 may comprise a BMC terminal 26 that is connected to e.g. the battery cells by using the busbar arrangement 100 described in this disclosure.

In one embodiment, the busbar arrangement 100 comprises at least one flexible area 2 between every two attachment sections 4.

In one embodiment, the busbar arrangement 100 comprises one flexible area 2 between every two attachment sections 4.

In one embodiment, there is no flexible area 2 between some of the attachment sections 4. For instance, if distance between two adjacent attachment sections 4 is very short, the busbar 1 between said two attachment sections can be devoid of flexible area.

The battery 20 includes a filling material 14 that is arranged to encapsulate at least one busbar arrangement 100.

In one embodiment, the filling material 14 is arranged inside at least one battery module 23, preferably all the battery modules of the battery 20.

In one embodiment, the filling material 14 is arranged in a room between the casing 21 and the battery modules 23. In one embodiment, such as shown in Figure 7, the filling material 14 is arranged in said room between the casing 21 and the battery modules 23 and inside the battery modules. The filling material inside the battery modules may have same composition as the filling material outside said battery modules, but this is not always necessary.

The busbar arrangement 100 described in this description may be manufactured by a method comprising, e.g.,
- manufacturing the busbar or a busbar blank, including the flexible area,
- providing at least one barrier element,
- arranging the barrier element(s) to enclose the flexible area, and
- fixing the barrier element(s) to the busbar or the busbar blank, such that the barrier element provides a cavity between the surroundings of the flexible area and the flexible area.

In one embodiment, it is manufactured a strip of material comprising plurality of busbar blanks, each of which comprises at least one flexible area. Then the barrier element(s) is/are arranged to enclose the flexible areas, the busbar blanks still in the strip of material. The barrier elements are fixed to the busbar blanks. Finally, the busbar blanks are released with the barrier elements from the strip.

In one embodiment, the barrier element is cast to the busbar or the busbar blank.

In one embodiment, the barrier element is attached to the busbar or the busbar blank by adhesive.

In one embodiment, the barrier element is fixed to the busbar or the busbar blank by a form fitting.

In one embodiment, the barrier element is fixed to the busbar or the busbar blank by a fastening device, such as screw or rivet.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

It will further be understood that reference to 'an' item refers to one or more of those items. The term "comprising" is used in this specification to mean including the feature (s) or act(s) followed thereafter, without excluding the presence of one or more additional features or acts.

### REFERENCE SYMBOLS

- 1: busbar
- 2: flexible area
- 3: barrier element
- 4: attachment section
- 5: contact
- 6: cavity
- 7: bend
- 8: length compensation section
- 9: barrier sheet
- 10: tape
- 11: adhesive section
- 12: tube
- 13: foam element
- 14: filling material
- 15: inside of bending
- 16: battery cell
- 17: surroundings
- 18: oblong opening
- 19: elongated element
- 20: battery
- 21: casing
- 22: battery terminal
- 23: battery module
- 24: module terminal
- 25: BMC
- 26: BMC terminal

- 100: busbar arrangement

## Claims

1. A busbar arrangement (100) for creating an electrical connection between at least two contacts (5), comprising
- a busbar (1), comprising
- at least two attachment sections (4) for attachment to respective contacts of said at least two contacts (5), and
a flexible area (2) arranged between said at least two attachment sections (4), the busbar arrangement (100) further comprising
- a barrier element (3) arranged to enclose the flexible area (2), the barrier element (3) configured to provide a cavity (6) between the surroundings (17) of the barrier element (2) and the flexible area (2).

2. The arrangement as claimed in claim 1, wherein
- the flexible area (2) comprises at least one bending (7), and
- the barrier element (3) is arranged to provide the cavity (6) at least at inside (15) of said bending.

3. The arrangement as claimed in any one of the preceding claims, wherein
- the flexible area (2) comprises a length compensation section (8) having an oblong opening (18) alternating with elongated elements (19), and
- the barrier element (3) is arranged to cover the oblong opening (18) such that the cavity (6) is provided.

4. The arrangement as claimed in any one of the preceding claims, wherein
- the barrier element (3) comprises a barrier sheet (9) that is configured to provide and maintain the cavity (6) between the flexible area (2) and said barrier sheet (9).

5. The arrangement as claimed in claim 4, wherein
- the barrier sheet (9) comprises a tape (10).

6. The arrangement as claimed in claim 5, wherein
- the tape comprises adhesive sections on (11) its edges.

7. The arrangement as claimed in any one of the preceding claims, wherein
- the barrier sheet (9) comprises a tube (12) and the flexible area (2) is arranged inside said tube.

8. The arrangement as claimed in any one of the preceding claims, wherein
- the barrier element (3) comprises a two-phase material system where a gas is in a non-gaseous flexible material.

9. The arrangement as claimed in claim 8, wherein
- the barrier element (3) comprises a foam element (13) that includes numerous gas cells.

10. The arrangement as claimed in any one of the preceding claims, wherein
- the busbar (1) consists of two attachment sections (4) and
- at least one flexible area (2) arranged between said two attachment sections (4).

11. The arrangement as claimed in any one of claims 1 - 9, wherein
- the busbar (1) comprises more than two attachment sections (4) and
- at least one flexible area (2) arranged between two attachment sections (4).

12. The arrangement as claimed in any one of the preceding claims, wherein
- the attachment section (4) is weldable to the contact (5).

13. The arrangement as claimed in any one of the preceding claims, wherein the busbar (1) is configured to create the electrical connection between at least two battery cells (16) .

14. A battery module (200), comprising
- the busbar arrangement (100) as claimed in any one of the preceding claims, and
- filling material (14) arranged to encapsulate the busbar arrangement (100).

15. The battery module as claimed in claim 14, wherein
- the flexible areas (2) of at least two busbars (1) are enclosed by a shared barrier element (3).
